**Europäisches Patentamt**

**European Patent Office**

**Office européen des brevets**

(11) Veröffentlichungsnummer: **0 119 469**
**B1**

(12) **EUROPÄISCHE PATENTSCHRIFT**

(45) Veröffentlichungstag der Patentschrift:
**18.10.89**

(21) Anmeldenummer: **84101568.8**

(22) Anmeldetag: **16.02.84**

(51) Int. Cl.⁴: **A 61 J 1/00**

(54) **Aufbewahrungsbeutel.**

(30) Priorität: **17.02.83 DE 3305365**

(43) Veröffentlichungstag der Anmeldung:
**26.09.84 Patentblatt 84/39**

(45) Bekanntmachung des Hinweises auf die Patenterteilung:
**18.10.89 Patentblatt 89/42**

(84) Benannte Vertragsstaaten:
**AT BE CH DE FR GB IT LI LU NL SE**

(56) Entgegenhaltungen:
**EP-A- 0 068 271**
**EP-A- 0 083 778**

(73) Patentinhaber: **Fresenius AG, Gluckensteinweg 5,
D-6380 Bad Homburg v.d.H. (DE)**

(72) Erfinder: **Herbert, Reinhold, Breite Strasse 7,
D-6392 Neu-Anspach 1 (DE)**

(74) Vertreter: **Luderschmidt, Wolfgang, Dr. Dipl.-Chem., Dr.
Fuchs, Dr. Luderschmidt, Dipl.-Phys. Seids, Dr. Mehler
Patentanwälte
Abraham-Lincoln-Strasse 7 Postfach 46 60,
D-6200 Wiesbaden (DE)**

ACTORUM AG

## Beschreibung

Die Erfindung betrifft einen Aufbewahrungsbeutel, insbesondere für medizinische Zwecke zur Lagerung von Blut oder Infusionslösungen, aus einem thermoplastischen polymeren Material und mit wenigstens einer Auslauftülle, die ein Rohrstück umfaßt.

Beutel der eingangs erwähnten Art werden millionenfach in der Medizin eingesetzt. Sie dienen beispielsweise zur Aufnahme von Blut als Blutbeutel oder zur sterilen Lagerung von parenteral zu verabreichenden Infusionslösungen. Zu diesem Zweck müssen sie vollkommen steril sein, was üblicherweise durch eine Erhitzung auf wenigstens 100 °C, insbesondere etwa 120 °C erzielt wird. Hieraus ergibt sich bereits die Anforderung an das thermoplastische polymere Material, wenigstens bis zur Erhitzungstemperatur stabil zu sein.

Darüber hinaus muß ein derartiger Beutel leicht, billig und in einem automatischen Herstellungsprozeß herzustellen sein und wegen seines geringen Werts nach dem Gebrauch wegwerfbar sein. Weiterhin soll er biegbar, zusammenfaltbar und im verarbeiteten Zustand derart transparent sein, daß Veränderungen der im Beutel enthaltenen Flüssigkeit sofort bemerkt werden können.

Als einziges Polymerisat, das diese Voraussetzung bisher erfüllt, ist Weich-Polyvinylchlorid (Weich-PVC) zum Einsatz gekommen, das also zur Verbesserung der elastischen Eigenschaften weichmachende Stoffe enthält. Diese weichmachenden Stoffe, beispielsweise Diisooktylphthalat, geben jedoch Anlaß zu bedenklichen Erscheinungen. So werden diese Stoffe nicht vollständig in den Hohlräumen zwischen den polymeren Ketten eingeschlossen und können daher durch das in den Beutel eingefüllte Wasser bzw. die wässrige Lösung aus dem Polymerisat herausgelöst werden, so daß es zu einer Verunreinigung der im Beutel enthaltenen Flüssigkeit kommt.

Schätzungen haben ergeben, daß ein über längere Zeit unter Verwendung derartiger PVC-Beutel behandelter Patient einige Gramm Weichmacher in sich aufgenommen hat, was an sich physiologisch höchst bedenklich ist und zu dauerhaften Schäden des Patienten führen kann.

Darüber hinaus wird ein Beutel aus Weich-PVC leicht von Mikroorganismen befallen, die insbesondere die Weichmacher herauslösen und damit regelmäßig den Beutel zerstören. Insofern mußte ein derartiger PVC-Beutel nach dem Füllen mit einer speziellen Umverpackung vor schädigenden Mikroorganismen geschützt werden.

Dieser Sachverhalt führte dazu, daß derartige PVC-Beutel die üblicherweise eingesetzten Glasflaschen als Aufbewahrungsbehälter für medizinische Lösungen nicht in wesentlichem Umfang verdrängen konnten und teilweise sogar in einigen Industrieländern auf dem medizinischen Gebiet überhaupt nicht zugelassen wurden.

Es wurden daher Versuche unternommen, das Weich-PVC durch andere Stoffe zu ersetzen. Diese Versuche scheiterten jedoch, da diese Stoffe entweder zu teuer waren oder aber mechanische und physiologische Nachteile aufwiesen. Beispielsweise besaßen sie eine zu hohe Wasserdampfdurchlässigkeit, was zur unerwünschten Erhöhung der Konzentration der in der Lösung enthaltenen Stoffe führte. Darüber hinaus setzten sich auslaugbare Bestandteile frei oder waren bei zu hoher mechanischer Beanspruchung leicht zu beschädigen.

In der CH-A-444 382 ist ein derartiger Kunststoffbeutel beschrieben, der für parenteral zu verwendende therapeutische Flüssigkeiten eingesetzt werden kann. Bei diesem Kunststoffbeutel besteht die Wandung aus einem Kunststofflaminat, das auf der Außenseite, also der flüssigkeitsabgewandten Seite, eine PVC-Schicht und auf der Innenseite eine Polyhalogen-Kohlenwasserstoff-Kunstharzschicht aufweist. Diese letztere Schicht weist keine pharmakologisch unzulässigen Bestandteile auf, die durch Auflösen in die in dem Beutel enthaltene Lösung übergehen könnten. Die zum Einsatz kommenden Polyhalogen-Kohlenwasserstoffe haben jedoch den Nachteil, daß sie sehr kostspielig zu produzieren und zu verarbeiten sind und an den Schweißnähten nicht ausreichend verschmelzen, so daß noch ein direkter Kontakt mit dem PVC besteht. Dieser Kontakt besteht im übrigen auch an der Auslaßöffnung, die üblicherweise vollständig aus PVC ausgeführt ist und die mit weiteren PVC-Verbindungsschläuchen verbunden werden kann. Weiterhin stellt ein derartiger Wegwerfbeutel eine Belastung für die Umwelt dar, da die Verbrennung dieser Beutel zu hochaggressiven Halogenwasserstoffen führt.

Ein weiterer Beutel ist in der US-A-4 140 162 beschrieben. Dieser Beutel besteht aus einer Kunststoffmasse mit drei Komponenten. Diese Komponenten sind ein Polyolefin, das im wesentlichen aus Propyleneinheiten besteht, ein Blockcopolymeres und, gegebenenfalls, ein Weichmacher, der ebenfalls ein Polymeres sein kann. Weiterhin kann dieser Beutel Antioxidantien aufweisen, die sicherlich nicht hygienisch unbedenklich sind.

Aus der vorstehenden Aufführung der Komponenten ist bereits ersichtlich, daß sowohl die Komponenten selbst als auch die Verarbeitung dieser Komponenten kostspielig sind und ein daraus hergestellter Beutel sich gegenüber den üblichen PVC-Beuteln sowohl aus Herstellungs- als auch aus Kostengründen nicht durchsetzen dürfte.

Dies hat dazu geführt, daß die gleiche Anmelderin eine weitere Kunststoffmasse zur Herstellung von Verbindungselementen zwischen PVC-Schläuchen einerseits und Polyolefinbeuteln andererseits in der DE-A-3 026 974 angemeldet hat. Diese Kunststoffmasse besteht wiederum aus mehreren polymeren Komponenten, für deren Herstellung und Preis das vorstehend Gesagte gilt. Weiterhin muß dieses Verbindungsglied sowohl mit dem Polyolefinbeutel als auch mit dem PVC-Schlauch verschweißt werden, was üblicherweise prozeßtechnische Schwierigkeiten macht und überdies kostenverursachend ist.

Festzuhalten ist insbesondere, daß sämtliche vorgeschlagenen Lösungen mit PVC-Verbindungsschläuchen arbeiten, die natürlich Weichmacherstoffe aufweisen und insofern als bedenklich anzusehen sind.

Diese Verbindungsschläuche, die üblicherweise als Auslauftülle mit den PVC-Beuteln verschweißt sind, weisen die gewünschten hochelastischen Eigenschaften auf, die zur Halterung von Einsteckverschlüssen notwendig sind. So darf die im Beutel enthaltene Flüssigkeit beim Sterilisieren durch Erhitzen auf etwa 120 °C nicht zwischen der Auslauftülle und dem Verschlußstück herausfließen. Darüber hinaus muß das Verschlußstück vom Schlauchstück derart fest umgeben sein, daß es allenfalls mit großer Kraftanwendung herausgezogen werden kann.

In der DE-A-3 200 264 hat man versucht, diese Probleme dadurch zu lösen, daß man Polyolefin-Beutel mit einem Schlauchansatzstück oder einem Einsatzstück aus einem kreuzvernetzten Copolymerisat von Olefin und Vinylacetat herstellte. Dabei wurde der Beutel mit dem Schlauchansatzstück oder Einsatzstück aus noch nicht kreuzvernetztem Copolymerisat von Olefin und Vinylacetat verschweißt und anschließend dieser gesamte Beutel der Kreuzvernetzungsbehandlung unterworfen.

Eine andere Lösung ist in der EP-A-0 068 271 beschrieben. Aus der EP-A-0 068 271 ist ein flexibler, flach drückbarer Behälter für medizinische Zwecke bekannt, der einen Behälter-Hauptkörper aus vernetztem EVA-Copolymerisat, ein Zugangselement, dessen eines Ende in den Behälter-Hauptkörper eingesetzt ist, aus einem Material, das gegenüber Hochdampfsterilisation wärmebeständig ist und Klebe- oder Adhäsionseigenschaften gegenüber unvernetztem EVA-Copolymerisat bei hohen Temperaturen aufweist, und eine Zwischenschicht aus einem unvernetzten EVA-Copolymerisat umfaßt. Die Herstellung dieses Behälters erfolgt derart, das man zunächst den Behälter-Hauptkörper dadurch herstellt, daß man aus einem EVA-Copolymerisat einen Behälterkörper der gewünschten Form herstellt, der an seinem Umfang mit Ausnahme eines vorbestimmten, einen nicht geschlossenen Abschnitt bildenden Teils vollständig verschweißt und verschlossen ist, und anschließend durch Bestrahlen mit einem Elektronenstrahl hoher Energie das Behältermaterial aus EVA-Copolymerisat kreuzvernetzt. Anschließend wird das Zugangselement an einem Ende in den nicht geschlossenen Abschnitt des Behälter-Hauptkörpers eingesetzt und über die Zwischenschicht aus unvernetztem EVA-Copolymerisat mit dem Behälter-Hauptkörper durch Hochfrequenzadhäsions-Verfahren verschweißt oder verklebt. Das Verfahren zur Herstellung der Behälter gemäß der EP-A-0 068 271 ist ein äußerst aufwendiges Verfahren und erfordert das Bestrahlen mit Elektronenstrahlen hoher Energie und zusätzlich ein Hochfrequenzadhäsionsverfahren.

Weiter ist zu berücksichtigen, daß es in der Nahrungsmittelindustrie seit langem in Kunststoffbeuteln verpackte Nahrungsmittel gibt, bei denen der Kunststoffbeutel gegebenenfalls eine zugeschweißte Auslauftülle aus gleichem Material aufweist. Solche Auslauföffnungen weisen jedoch nicht die vorstehend erwähnten hochelastischen Eigenschaften auf und können nur dann sterilisiert werden, wenn der Beutel selbst sterilisierbar ist.

Demzufolge liegt der vorliegenden Erfindung die Aufgabe zugrunde, einen Beutel der eingangs erwähnten Art zu schaffen, der wenigstens eine Auslauftülle aus einem vom Beutelmaterial unterschiedlichen Material aufweist und bei Temperaturen von wenigstens 100 °C stabil und hitzesterilisierbar ist.

Erfindungsgemäß wird diese Aufgabe durch die kennzeichnenden Merkmale des Anspruchs 1 gelöst.

Erfindungsgemäß wird nunmehr ein Beutel erhalten, der unter Einsatz von sehr kostengünstigen Kunststoffmaterialien, wie beispielsweise Polyethylen, hergestellt werden kann. Hierzu können die üblichen Extrudierverfahren zur Herstellung von Folien oder Schlauchfolien zur Anwendung kommen, die den Fachmann vor keine nennenswerten Probleme stellen.

Auch die Rohrstücke bzw. Einsatzstücke, die im wesentlichen starr, vorzugsweise starr sind, werden aus sehr kostengünstigen Kunststoffmaterialien und nach einfachen üblichen Verfahren hergestellt.

In der Medizin ist die Verwendung von Polycarbonaten und anderen Hartkunststoffen als Material für Schlauchstücke, Aufsatzstücke, Stopfen und andere relativ starre Gegenstände bereits bekannt. Es ist jedoch auch bekannt, daß es nicht möglich ist, Rohrstücke aus solchen Materialien in Aufbewahrungsbeuteln aus Polyolefinen zu befestigen, da Polyolefine nicht mit Hartkunststoffmaterialien verschweißt werden können und so keine dichte Verbindung zwischen Beutel und Rohrstück erhalten werden kann.

Erfindungsgemäß wurde überraschend festgestellt, daß es möglich ist, Rohrstücke und Einsatzstücke aus Hartkunststoffmaterialien durch Verwendung einer Verbindungsschicht mit dem Polyolefinbeutel zu verbinden.

Diese Verbindungsschicht, die als Schicht zwischen dem Rohrstück oder dem Einsatzstück und dem Beutel eingesetzt wird, geht ebenfalls von sehr kostengünstigen Olefin-Ausgangsmaterialien aus, die mit einem bestimmten Anteil Vinylacetat (VAC) copolymerisiert sind. Wie bekannt, läßt dieses Copolymerisat von Olefin und Vinylacetat mit steigendem VAC-Gehalt die Rückprall-Elastizität, die ein Maß für die Elastizität des Materials ist, sprunghaft ansteigen. So wächst zwar beispielsweise bei einem Copolymerisat aus Ethylen und Vinylacetat (EVA) mit steigendem VAC-Gehalt die Rückprall-Elastizität, doch fällt andererseits aber auch die Schmelztemperatur im interessierten VAC-Bereich auf Werte unter 100 °C ab, so daß eine Sterilisation eines Beutels mit einer derartigen Verbindungsschicht nicht mehr möglich erscheint.

Zwar ist es möglich, Schläuche auf der Basis von VAC-haltigen Polyolefinen durch Kreuzvernetzung thermisch zu stabilisieren und sogar noch in ihrem Elastizitätsverhalten zu verbessern, jedoch ist es nicht mehr möglich, diese kreuzvernetzten Schläuche mit dem als Beutelmaterial eingesetzten Ausgangsolefin allein zu verschweißen; es kommt keine Verbindung zwischen dem Polyolefin und dem kreuzvernetzten Copolymerisat aus Olefin und VAC zustande. Daher ist man gemäß der DE-A-3 200 263 so vorgegangen, daß man einen Polyolefinbeutel und einen nichtkreuzvernetzten Schlauch aus einem Copolymerisat aus Olefin, insbesondere Ethylen, und VAC miteinander verschweißt und anschließend der Kreuzvernetzung unterwirft.

Erfindungsgemäß wurde nun ferner überraschenderweise gefunden, daß man die Verbindungsschicht aus einem Copolymerisat aus Olefin, insbesondere Ethylen, und VAC oder aus dem Polyurethan sowohl mit dem Polyolefinbeutel als auch mit dem aus Hartkunststoff, insbesondere Polycarbonat, bestehenden Rohrstück oder Einsatzstück verschmelzen kann und anschließend bei Überdruck sterilisieren kann, ohne daß eine vorherige Kreuzvernetzung erforderlich ist. Obgleich bei der Sterilisation das Copolymerisat aus Olefin und Vinylacetat bzw. das Polyurethan stark erweicht, wird dennoch ein Beutel erhalten, der völlig leckfrei ist und ausgezeichnete mechanische Eigenschaften und ausgezeichnete Halteeigenschaften an den Rohrstücken besitzt, so daß daran befestigte elastische Kupplungs- oder Aufsatzstücke nicht mehr abgezogen werden können. Das Rohrstück oder Einsatzstück ist über die Verbindungsschicht fest, völlig dicht und leckfrei mit dem Polyolefinbeutel verbunden. Die Rohrstücke oder Einsatzstücke können ohne Zerstörung des Beutels nicht mehr aus dem Beutel gezogen werden. Ein derartiger sterilisierbarer Beutel für medizinische Zwecke ist also, soweit dies seine mechanischen Eigenschaften betrifft, den Eigenschaften eines herkömmlichen PVC-Beutels zumindest gleichwertig.

Darüber hinaus ist er weichmacherfrei, da die üblicherweise als Beutelmaterial eingesetzten Polyolefinmaterialien in Folienform keine Weichmacherzusätze aufweisen, so daß zudem ein Befall durch Mikroorganismen wirksam verhindert wird. Demzufolge ist der erfindungsgemäße Beutel in jeder Hinsicht als hygienischer anzusehen gegenüber dem heute vielfach eingesetzten PVC-Beutel.

Zu einsetzbaren Polyolefinen, die als Polymere zur Herstellung des erfindungsgemäßen Beutels eingesetzt werden können, gehören Polymerisate aus Olefinen, wie Ethylen, Propylen, Butylen u. dgl. Bevorzugt ist als Ausgangsolefin Ethylen, das gegebenenfalls mit einer oder mehreren Gruppen substituiert ist.

Als Substituenten kommen beispielsweise die Methyl- oder Ethylgruppe, die Vinylgruppe und Halogenatome, insbesondere Fluoratome, in Frage.

Besonders bevorzugt ist Ethylen, das zu Polyethylen polymerisiert ist.

Spezielle Beispiele für Polyolefine sind Polyethylen, Polypropylen, Poly-n-butylen, Polyisobutylen, Poly-4-methylpenten-1, chlorsulfoniertes Polyethylen, Polystyrol, halogenierte Polyethylene, wie Polyvinylfluorid, Polyvinylidenfluorid und Polyvinylidenchlorid, Polymethylmetacrylat u. dgl. Die zur Herstellung vorstehender Polyolefine eingesetzten Olefine können auch als Copolymerisate und Mischpolymerisate mit anderen Vinylverbindungen eingesetzt werden, beispielsweise Ethylen/Propylen-Kunststoffe, Poly-(Ethylen/Vinylacetat), Acrylnitril/Butadien/Styrol-Polymerisate, Ethylen-Propylen-Block-Copolymerisate, Styrol-Copolymerisate, Vinylidenfluorid enthaltende Copolymerisate sowie Styrol enthaltende Copolymerisate.

Polyolefine sind erfindungsgemäß Produkte, die durch die Vinylpolymerisation von gegebenenfalls substituiertem Ethylen hergestellt werden. Diese Produkte können auch geringe Zusätze von weiteren Polymerisaten aufweisen, die im wesentlichen nicht die Struktur dieser Polyolefine stören oder verändern. So können beispielsweise geringe Zusätze von Styrol oder Polyacrylnitril substituierten Ethylenverbindungen zugesetzt werden. Die dadurch entstehenden Polyolefin-Produkte werden als zu den vorstehend genannten Polyolefinen zugehörig angesehen.

Erfindungsgemäß wird vorzugsweise als Polyolefin Polyethylen als Material für den Beutel eingesetzt, das gegebenenfalls geringe Zusätze an Vinylacetat in Form des Copolymers von Ethylen und Vinylacetat aufweisen kann. In einem solchen Fall kann beispielsweise der Vinylacetatgehalt bis zu 10 Gew.-% betragen.

Insbesondere wird ein Polyethylen mit mittlerer bis hoher Dichte (MDA und HDA) eingesetzt, das üblicherweise durch Niederdruckpolymerisation hergestellt wird. Dabei liegt die Dichte in einem Bereich von 0,91 bis 0,94, insbesondere etwa bei 0,935 g/cm$^3$.

Weiterhin weist das erfindungsgemäß bevorzugt eingesetzte Polyethylen ein hohes Molekulargewicht und eine enge Molekulargewichtsverteilung auf.

In jedem Fall ist jedoch darauf zu achten, daß derartige Polyolefine keinen Schmelzpunkt besitzen, der unterhalb der Sterilisationstemperatur von 110–120 °C liegt. Vorzugsweise soll der Schmelzbereich oberhalb 116 °C, insbesondere bei 120–124 °C liegen, während die Vicat-Erweichungstemperatur nach DIN 53460 oberhalb 115 °C liegen soll.

Die Sauerstoffdurchlässigkeit der vorstehend genannten Polyolefine kann ein Problem bei solchen Lösungen darstellen, die über längere Zeit aufbewahrt werden, so daß es zu einer Oxidation der gelösten Bestandteile kommen kann. Letzteres ist insbesondere bei Aminosäurelösungen kritisch und muß daher sicher ausgeschaltet werden.

Zur Behebung dieses Problems kann vorteilhafterweise die Beutelfolie aus dem vorstehend genannten Polyolefin auf ihrer Außenseite mit einer oder mehreren diese Sauerstoffdurchlässigkeit senkenden Schicht(en) beschichtet sein, beispielsweise einer Metallfolie oder einem weiteren Polymerisat. Eine solche Beschichtung wird vorteilhafterweise auch aus Sicherheitsgründen eingesetzt, da selbst bei äußerst sorgfältiger Herstellung die Beutelfolie nadelförmige Löcher (pin holes) aufweist, die nicht zu erkennen sind und die Sterilität der eingefüllten Lösung beeinträchtigen können.

Weiterhin kann eine solche Überschichtung auch die mechanische Belastbarkeit eines derartigen Beutels erheblich verbessern, so daß ein solcher Beutel auch bei einem Wurf aus einer Höhe von mehreren Metern nicht zerplatzt.

Vorteilhafterweise wird eine solche Folie bzw. Schicht eingesetzt, die einen höheren Schmelzpunkt als das der Lösung zugewandte Polymerisat aufweist, also bei der Schmelztemperatur der Innenfolie selbst nicht schmilzt und infolgedessen nicht an einem Siegelwerkzeug anhaftet. Insofern kann eine solche Außenfolie also als Trennmittel bei der Versiegelung der Innenfolie dienen.

Als Polymerisat für die Herstellung eines derartigen Laminats kann jedes der vorstehenden Polyolefine eingesetzt werden. Bevorzugt sind jedoch solche Polymere, die eine niedrige Wasserdampfdurchläßigkeit und eine niedrige Sauerstoffdurchläßigkeit aufweisen. Hierzu gehören Polyamide, PVC, Polyvinylidenchlorid, Polyvinylfluorid, Polytrifluorchlorethylen, Polyethylenterephthalat, Polyester u. dgl. Besonders bevorzugt sind Polyamid, Polyvinylidenchlorid, Polyethylenterephthalat und Polyester.

Als Polyamid wird vorteilhafterweise ein Polycaprolactam eingesetzt, das ohne Schädigung mit Heißdampf von 120–140 °C behandelt und sterilisiert werden kann. Vorteilhafterweise enthält dieses Polyamid keine stabilisierenden Zusätze und entspricht somit in seiner Zusammensetzung den Anforderungen zum Einsatz auf dem Lebensmittelsektor.

Die polymeren Außen- und Innenfolien werden vorteilhafterweise mittels eines Kaschierklebers, wie Polyvinylidenchlorid oder eines Polyurethans, zusammengeklebt. Ein derartiger Polyurethan-Kleber kann vorteilhafterweise ein Zweikomponentenklebstoff sein, wobei die erste Komponente aus einem Kaschierkleber und die zweite Komponente aus einem Zusatzlack besteht.

Herstellungstechnisch kann das als Innenfolie eingesetzte Polyolefin in Form einer schlauchartigen Folie extrudiert und anschließend mit einer Kaschierfolie unter Verwendung des vorstehend erwähnten Kaschierklebers, wobei Polyurethan bevorzugt ist, verklebt werden. Sofern PVC als Außenfolie eingesetzt wird, ist bei der erfindungsgemäßen Polyolefinfolie sichergestellt, daß die im PVC befindlichen Weichmacher nicht durch den Kaschierkleber und die Polyolefinfolie in die im Beutel befindliche Lösung diffundieren.

Bevorzugte Laminate weisen bei einer Temperatur von etwa 23 °C und einer relativen Luftfeuchtigkeit von 85% in der Regel eine Wasserdampfdurchläßigkeit nach DIN 53 122 von < 1 auf. Derartige Werte gelten für Standardlaminate, die vorteilhafterweise bis zu 0,2 mm stark sind, mit einer Stärke von 50–100, insbesondere etwa 75 µm für die Polyolefinfolie und 20–100, insbesondere 30–70 µm für die polymere Kaschierfolie, wie Polyamid.

Weiterhin ist bei derartigen bevorzugten Laminaten die Sauerstoffdurchläßigkeit gesenkt. wobei dieser Wert unterhalb 15 cm³/m² × Tag × bar Druckdifferenz liegt.

Solche Folien sind sowohl vom Bundesgesundheitsamt in Berlin als auch von der FDA (Federal Drug Administration) in USA wegen ihrer physiologischen Unbedenklichkeit zur Verwendung im Lebensmittelbereich und im medizinischen Bereich zugelassen worden.

Wie bereits vorstehend erwähnt, weist die der im Beutel befindlichen Flüssigkeit zugewandte Polyolefinfolie keinerlei Weichmacher oder Zusätze auf, die u. U. physiologisch bedenklich sind und vor allen Dingen in die wässrige Lösung diffundieren könnten. Weiterhin ist die gegebenenfalls mit einer organischen Kaschierfolie versehene Polyolefinfolie klar und durchsichtig und weist diese Eigenschaften auch nach dem Sterilisieren auf.

Als Materialien für die erfindungsgemäß angewandten Rohrstücke oder Einsatzstücke, die im wesentlichen starr, vorzugsweise jedoch starr und vorteilhafterweise durchsichtig sind, werden Hartkunststoffe bzw. Hartpolymere, d.h. Kunststoffe, die sich erst bei Überdrücken von mindestens 1 bar in nennenswertem Maße verformen lassen und vom medizinischen Standpunkt unbedenklich sind, d.h. keine nachteiligen Wirkungen für den Patienten besitzen, verwendet. Von diesen Hartkunststoffen werden vorzugsweise Hart-PVC, Polypropylen, Polyamide, Polycarbonate. Polyester, Polyacrylate u. dgl. und/oder Copolymerisate derselben sowie Styrol enthaltende Copolymerisate derselben, insbesondere jedoch Polycarbonate, verwendet.

Als Polycarbonate geeignet sind z.B. solche, die aus 4,4'-Dioxy-diphenyl-alkanen, beispielsweise aus 4,4'-Dioxy-diphenyl-methan, 4,4'-Dioxy-diphenyl-1,1-ethan, 4,4'-Dioxy-diphenyl-1,1-butan, 4,4'-Dioxy-diphenyl-1,1-isobutan, 4,4'-Dioxydiphenyl-1,1-cyclopentan, 4,4'-Dioxy-diphenyl-1,1-cyclohexan, 4,4'-Dioxy-diphenyl-phenyl-methan, 4,4'-Dioxy-diphenyl-2,2-propan, 4,4'-Dioxy-diphenyl-2,2-butan, 4,4'-Dioxy-diphenyl-2,2-pentan, 4,4'-Dioxy-diphenyl-methyl-isobutyl-methan, 4,4'-Dioxy-diphenyl-2,2-hexan, 4,4'-Dioxy-diphenyl-2,2-nonan, 4,4'-Dioxy-diphenyl-methyl-phenylmethan, 4,4'-Dioxy-diphenyl-4,4-heptan oder 4,4'-Dioxy-diphenyl-1,2-ethan erhalten werden. Ein geeignetes Polycarbonat ist beispielsweise das aus 4,4'-Dioxy-diphenyl-2,2-propan (Bisphenol A) und Kohlensäure hergestellte Polycarbonat.

Zu den geeigneten Polyestern gehören sowohl gesättigte lineare Polyester als auch ungesättigte und aromatische Polyester, wie beispielsweise Polyethylenglycolterephthalat, Polybutylenterephthalat oder Polyätherester.

Zu den verwendbaren Polyamiden gehören solche, für die als Ausgangsstoffe gradkettige Ω-Aminocarbonsäuren der Kettenlänge $C_6$–$C_{12}$ und deren Lactame, adipinsaures, sebacinsaures, dodecandicarbonsaures und heptadecandicarbonsaures Hexamethylendiamin, Isophthalsäure, Bis(4-aminocyclohexyl)-methan, 2,2-Bis-(4'-aminocyclohexyl)-propan, 3,3'-Dimethyl-4,4'-diaminodicyclohexyl-methan, Terephthalsäure oder deren Dimethylester, 1,6-Diamino-2,2,4-trimethylhexan, 1,6-Diamino-2,4,4-trimethylhexan, 1-Amino-3-aminomethyl-3,5,5-trimethylcyclohexan, Polyethylen, Mischpolymerisate aus Ethylen, Propylen, Butylen, Vinylestern und ungesättigten aliphatischen Säuren sowie deren Salzen und Estern verwendet werden.

Unter Polyacrylaten werden erfindungsgemäß Polyacrylsäureester, die sowohl von Acrylsäure als auch von Methacrylsäure abgeleitet sind, verstanden, wie beispielsweise Polymethylmethacrylat.

Als Material für die Verbindungsschicht wird ein Copolymerisat eines Olefins mit Vinylacetat oder ein Polyurethan eingesetzt. Beispiele für Polyolefine, die aus diesem Olefin hergestellt werden, sind Polyethylen, Polypropylen, Poly-n-butylen, Polyisobutylen, halogenierte Polyethylene, chlorsulfonierte Polyethylene u. dgl., wie sie vorstehend bereits genannt sind. Bevorzugt wird Polyethylen eingesetzt. Derartige Copolymerisate weisen einen Vinylacetatgehalt von 5–70, vorzugsweise 10–50, insbesondere 15–40 Gew.-% auf. Beispielsweise kann der Vinylacetatgehalt 28 Gew.-% betragen. Wie bereits vorstehend erläutert, fällt der Schmelzpunkt von Polyethylen mit steigendem Vinylacetatgehalt von etwa 125 °C auf ca. 70 °C ab, wenn ein VAC-Gehalt von 30 Gew.-% vorliegt. Ein derartiges Copolymeres schmilzt natürlich bei einer Sterilisationstemperatur oberhalb 100 °C zusammen. Andererseits steigt die geforterte Rückprall-Elastizität dieser Copolymeren mit steigendem VAC-Gehalt von 35 auf 55% bei 30%igem VAC-Gehalt an.

Überdies läßt sich ein derartiges Material problemlos mit dem Material des Beutels, sofern im wesentlichen ähnliche oder sogar gleiche Polyolefinmaterialien eingesetzt werden, sowie mit dem Material des Rohrstückes oder Einsatzstückes verschmelzen. Der Einsatz im wesentlichen gleicher Polyolefinmaterialien für die Verbindungsschicht und den Beutel ist daher bevorzugt. Vorzugsweise wird als Material für die Verbindungsschicht ein Copolymerisat aus Ethylen und Vinylacetat mit den vorstehend genannten Gewichtsbereichen eingesetzt, wobei als Beutelmaterial vorteilhafterweise polymerisierte Ethylen- oder Propylenverbindungen in Frage kommen. Besonders bevorzugt ist die Kombination von EVA als Material für die Verbindungsschicht und von Polyethylen als Beutelmaterial in den vorstehend angegebenen Gewichtsbereichen.

Zu den geeigneten Polyurethanen gehören beispielsweise solche, für deren Herstellung Polyesterpolyole auf der Basis von Kohlensäure, Adipinsäure, Phthalsäure, Trimellitsäure, Sebacinsäure, Maleinsäure oder Ethandiol, Mischpolymerisate aus Vinylchlorid und Vinylacetat und/oder Vinylpropionat, in denen freie Hydroxylgruppen enthalten sein können, Epoxyverbindungen, hergestellt aus (4,4'-Dioxy-2,2'-diphenyl)-propan und Epichlorhydrin, sowie Vinylidenchlorid-Copolymerisate verwendet werden.

Die Stärke der Verbindungsschicht ist nicht kritisch. Sie sollte jedoch wenigstens 0,1 mm und aus praktischen Erwägungen nicht mehr als 7 mm betragen. Vorzugsweise ist die Verbindungsschicht 0,1–4 mm stark.

Unter «Rohrstück» bzw. «Einsatzstück» wird erfindungsgemäß ein rohrförmiger Körper oder ein ein oder mehrere rohrförmige Körper oder rohrförmige Öffnungen aufweisender Einsatzkörper verstanden, der die Strömungsverbindung zwischen dem Innenraum des Beutels und den mit dem äußeren Ende dieser rohrförmigen Körper oder Öffnungen in Verbindung stehenden Schläuchen, Infusionsgeräten, Kathetern, Spritzen u. dgl. herstellt. Hierunter wird auch ein Einsatzstück verstanden, das über die Verbindungsschicht in den Beutel eingeschweißt wird und wenigstens eine entsprechende Auslauföffnung aufweist, ohne daß dieses Einsatzstück in Form eines Rohres oder Schlauches vom Beutelrand vorsteht. Ein solches Einsatzstück wird ähnlich wie ein Rohrstück mit einer Verbindungsschicht versehen, dann in den noch nicht versiegelten Randbereich des Beutels eingeführt und anschließend mit dem Beutel hitzeverschmolzen.

Wie bereits ausgeführt, können erfindungsgemäß die Rohrstücke bzw. das Einsatzstück unmittelbar am Beutelrand abschließen, ohne daß ein Teil desselben rohrförmig über den Beutelrand hinausragt. Diese Ausführungsform ist zum Einstecken von elastischen Stopfen oder Ansatzstücken in die rohrförmigen Öffnungen geeignet bzw. vorgesehen.

Gemäß einer anderen Ausführungsform können erfindungsgemäß die Rohrstücke bzw. Teile der Einsatzstücke rohrförmig über den Beutelrand herausragen und sind zum Darüberziehen oder Überziehen eines Schlauches oder Aufsatzstückes aus hochelastischem, physiologisch unbedenklichem Material, wie Gummi, kreuzvernetztem EVA u. dgl. vorgesehen. Die Rohrstücke selbst oder rohrförmig aus dem Einsatzstück hervorstehenden Teile können auch trichter- oder birnenförmig ausgebildet sein und mit den trichterförmigen Erweiterungen über den Beutelrand herausragen, wobei diese Erweiterungen gegebenenfalls noch eine Membran aus üblicherweise zu diesem Zweck verwendetem Material und eine Kappe aus elastischem Material oder einen durchstechbaren Einsatz, z. B. aus Latex, aufweisen können, d.h. als Infusionsstopfen oder Zuspritzstopfen ausgebildet sein können.

Die Herstellung und Verarbeitung der Beutelmaterialien erfolgt nach den in der Kunststofftechnik üblichen Methoden. So können beispielsweise, wie vorstehend erläutert, die Beutel aus einer Extrusion schlauchförmiger Folien, entsprechendem Zuschnitt der Folien und anschließender Randschweißung hergestellt werden. Dieser Beutel, bei dem der für die Auslauftülle vorgesehene Rand unverschweißt bleibt, wird anschließend mit einem eine vorstehend genannte Verbindungsschicht aufweisenden Rohrstück oder einem die Auslauföffnung(en) aufweisenden und von einer Verbindungsschicht umgebenen Einsatzstück verschmolzen. Dazu werden das Rohr- bzw. Einsatzstück mit einer vorstehend genannten Verbindungsschicht gemäß üblichen Techniken versehen, was z.B. durch einfaches Aufziehen oder Aufstülpen des elastischen Materials in Schlauchform auf das Rohrstück oder Einsatzstück erfolgen kann, und in den geöffneten Beutel eingeführt.

Hierauf erfolgt die Hitzesiegelung des gesamten, noch nicht verschweißten Randes mit dem mit der Verbindungsschicht versehenen Rohrstück oder Einsatzstück. Sofern mehrere Rohrstücke vorgesehen sind, führt man natürlich diesen Verarbeitungsschritt gleichzeitig aus, wobei natürlich entsprechende Siegelwerkzeuge benützt werden. Bei der Hitzesiegelung, die gemäß üblichen Verfahren durchgeführt wird, wird sowohl der Beutel mit der Verbindungsschicht als auch die Verbindungsschicht mit dem Rohrstück oder Einsatzstück hitzeversiegelt.

Die so hergestellten Beutel weisen im wesentlichen die gleichen Eigenschaften wie ein PVC-Beutel mit der Ausnahme auf, daß die aus EVA bestehende Verbindungsschicht beim Sterilisieren oberhalb ca. 80°C stark erweicht, jedoch durch das Rohrteil und die hitzefeste Folie fixiert wird. Die Siegelnaht, die zwischen dem Beutel, der Verbindungsschicht und dem Rohrstück bzw. dem Einsatzstück gebildet ist, ist so fest, daß nur noch eine gewaltsame Entfernung dieses Stückes möglich ist.

Die Sterilisierung der so hergestellten Beutel erfolgt nach üblichen Methoden im Autoklaven, wobei natürlich, um das Platzen des beutels zu vermeiden, im Autoklaven zum Ausgleich des im Beutelinneren herrschenden Druckes ein Überdruck angewandt werden muß. Aus Sicherheitsgründen und zur Fixierung der Verbindungsschicht wird jedoch ein höherer Überdruck angewandt, als er zum Ausgleich des im Beutelinneren herrschenden Druckes notwendig ist. Die Höhe dieses Überdruckes über den im Beutel herrschenden Druck ist nicht kritisch, z.B. sollte er mindestens 0,5 bar größer als der im Beutel herrschende Druck sein. Er kann 2 bis 3 bar, beispielsweise 2,2 bar betragen.

So wird beispielsweise der so hergestellte, ein Rohrstück und die Verbindungsschicht aufweisende, hitzeversiegelte Beutel mit z.B. Wasser oder der entsprechenden zu sterilisierenden Lösung (z.B. Elektrolytlösung) gefüllt und in einen Überdruckautoklaven gebracht, wo er bei einer Temperatur von etwa 120°C und einem Überdruck von etwa 2,2 bar sterilisiert wird.

Wie bereits ausgeführt, wurde überraschend festgestellt, daß zwar bei dieser Behandlung das für die Verbindungsschicht verwendete Copolymerisat aus Olefin und Vinylacetat schmilzt, der Beutel jedoch völlig dicht und leckfrei ist und sein Gewicht konstant bleibt, d.h. keinerlei Gewichtsverlust oder -zunahme auftritt.

Die erfindungsgemäßen Beutel werden durch die beiliegenden Zeichnungen und die nachfolgenden Ausführungen weiter erläutert.

Es zeigen:

Fig. 1 einen erfindungsgemäßen Beutel für Infusionszwecke schematisch in Draufsicht,

Fig. 2 einen Schnitt durch den Beutel gem. Fig. 1 entlang der Linie II–II,

Fig. 3 den Randbereich einer weiteren Ausführungsform des erfindungsgemäßen Beutels mit Zuspritz- und Infusionsstopfen,

Fig. 4 eine Schnittansicht des Randbereiches eines erfindungsgemäßen Beutels mit einem Aufsatzstück aus EVA,

Fig. 5 einen Ausschnitt aus einer Draufsicht auf ein Einsatzstück mit über den Beutelrand vorstehenden Rohren und Aufsatzstücken, aber ohne Abreißdeckel,

Fig. 6 einen Schnitt durch die Ausführungsform gem. Fig. 5 entlang der Linie V–V,

Fig. 7 eine weitere Ausführungsform in der Draufsicht, die der Ausführungsform gem. Fig. 5 ähnelt und

Fig. 8 einen Ausschnitt einer Schnittansicht einer Ausführungsform, die die Umhüllung eines Rohrstücks mit Aufsatzstück zeigt,

Fig. 9 einen Ausschnitt einer Schnittansicht einer anderen Ausführungsform, die eine eingesiegelte Latexkugel mit einer EVA-Verbindungsschicht mit Umhüllung zeigt.

Der Beutel 10 besteht im wesentlichen aus der Kammer 12, die allseits von einem Schweißrand 14 umschlossen ist, wobei dieser Beutel 10 zwei Auslauföffnungen 16 und 18 aufweist, die jeweils mit einem Rohrstück 20 und 22 als Auslauftüllen in Verbindung stehen. Über diese Rohrstücke 20 und 22 kann die aufzubewahrende Flüssigkeit, beispielsweise eine Infusionslösung oder Blut in die Kammer 12 des Beutels 10 eingeleitet werden, wobei das eine oder beide Rohrstücke als Einlaufstutzen verwendet werden können.

Ein solcher Beutel 10 wird üblicherweise dadurch hergestellt, daß zunächst die zur Beutelherstellung benötigten Folien aufeinandergelegt werden und anschließend der Schweißrand 14 gebildet wird, wobei die Auslauföffnungen 16 und 18 beim Verschweißen ausgespart werden. Anschließend werden die Rohrstücke 20 und 22, auf denen jeweils die Verbindungsschicht 19 angebracht wurde, in die Auslauföffnungen 16 und 18 eingeführt und danach mit den Beutelfolien entlang ihres Außenumfangs verschweißt. Die Verbindungsschicht 19 kann dabei auf die Rohrstücke so aufgebracht werden, daß man ein Schlauchstück aus dem als Verbindungsschicht vorgesehenen Material auf das Rohrstück 20/22 zieht oder stülpt. Gegebenenfalls können Verbindungsschicht und Rohrstück bereits vor Einführen in die Öffnungen 16 und 18 verschweißt werden. Wie vorstehend festgestellt, wird vorzugsweise Polyethylen als Beutelmaterial mit dem vorzugsweise als Material für die Verbindungsschicht 19 eingesetzten Copolymerisat aus Ethylen und Vinylacetat und dem vorzugsweise für das Rohrstück 20/22 verwendeten Polycarbonat verschweißt und anschließend eine Sterilisierung des Beutels bei vorzugsweise ca. 120 °C und etwa 2 bar Überdruck im Überdruckautoklaven durchgeführt.

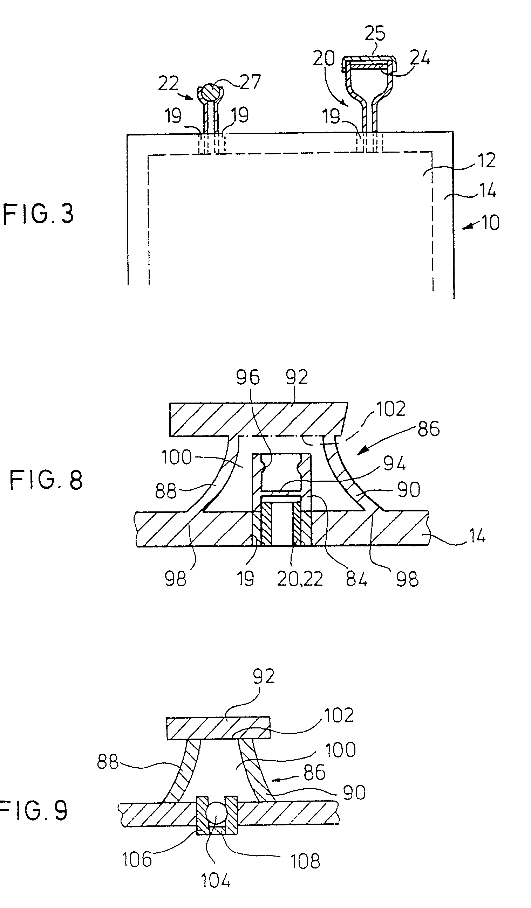

Für Infusionszwecke kann gemäß Fig. 3 das Rohrstück 20 trichterförmig ausgebildet werden, wobei das erweiterte stirnseitige Ende mit einer durchstechbaren, sterilen Membran 24 aus dem üblicherweise verwendeten Chlorobutylkautschuk verschlossen ist. Diese Membran 24 wird gemäß üblichen Techniken mit dem Rohrstück, das vorzugsweise aus Polycarbonat besteht, verbunden und ist aus hygienischen Zwecken mit einer Kappe 25 abgedeckt.

Zum Zwecke des Zuspritzens von Lösungen oder dgl. kann gemäß Fig. 3 das andere Rohrstück 22 ebenfalls trichterförmig ausgebildet sein und einen durchstechbaren Einsatz 27, beispielsweise aus Latex, aufweisen. Sowohl Rohrstück 20 als auch Rohrstück 22 sind von der Verbindungsschicht 19 umgeben.

Da der Beutel 10 üblicherweise mit den Rohrstücken 20/22 nach unten aufgehängt wird, damit die eingefüllte Lösung ohne Schwierigkeiten ausströmen kann, kann der diesen Rohrstücken 20, 22 gegenüberliegende Rand 14 eine Öffnung 28 aufweisen, in die ein hakenförmiges Halteteil eines Stativs oder dgl. zur Befestigung und Lagerung der Beutel 10 eingeführt werden kann.

Gemäß der Ausführungsform, die in vergrößerter Darstellung in Fig. 2 gezeigt ist, besteht das Beutelmaterial aus einem Laminat 30, das folienförmig ausgebildet ist. Dieses Laminat 30 weist gemäß der besonders bevorzugten Ausführungsform auf der der Lösung zugewandten Seite eine Polyethylenfolie 32 auf, die üblicherweise eine Dicke von 30–100, vorzugsweise 75 µm besitzt. Das eingesetzte Polyethylen ist vorzugsweise ein Material mit einer Dichte von 0,935 g/cm³, einem Schmelzbereich von etwa 121–124 °C und einer Vicat-Erweichungstemperatur von etwa 118 °C.

Auf diese Polyethylenfolie 32 ist eine Polyamidfolie 34 mittels eines Polyurethanklebers aufgeklebt, die üblicherweise eine Dicke von etwa 30–70 µm besitzt.

Aus der Fig. 2 ist weiterhin ersichtlich, daß die Polyethylenfolie 32 im Übergangsbereich zu den Rohrstücken 20 und 22 eine Verbindungsschicht 19 aufweist, die eine innige Verbindung zwischen der Folie und dem Rohrstück 20, 22 herstellt, so daß ein Herausreißen dieser Rohrstücke 20, 22 aus dem Beutel 10 nur unter Zerstörung des gesamten Beutels möglich ist.

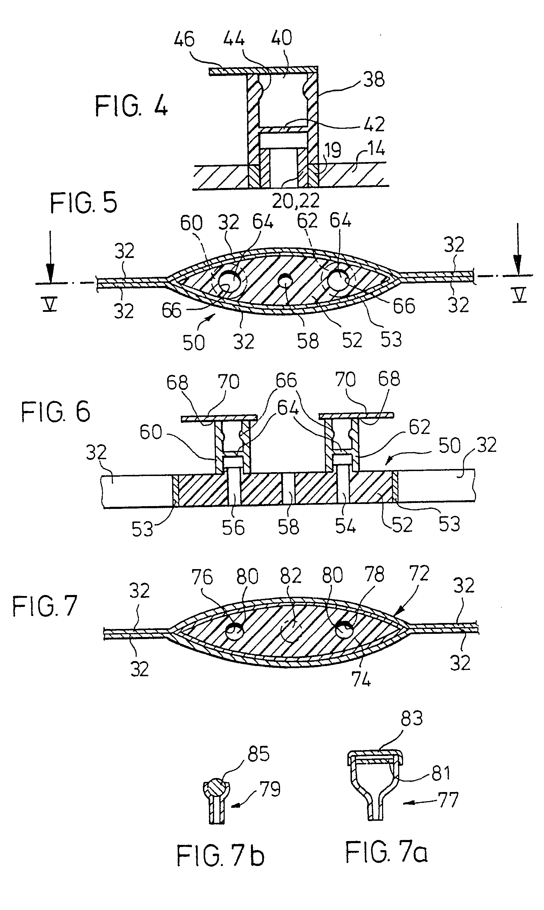

In Fig. 4 ist ein Ausschnitt des Randbereichs einer Ausführungsform des erfindungsgemäßen Beutels dargestellt, wobei auf den Rohrstücken 20 und 22 Aufsatzstücke 38 vorgesehen sind.

Über den Endbereich der Rohrstücke 20, 22 ist ein Aufsatzstück 38 gezogen, das in der Nähe der Einführöffnung 40 eine sich quer über diese Einführöffnung 40 erstreckende Membran 42 aufweist, die das Beutelinnere hermetisch von Umwelteinflüssen abschließt. Diese Membran 42 wird beim Einsatz mit der Spitze eines nichtgezeigten Infusionsgerätes aufgestochen, so daß durch dieses die im Beutel 10 enthaltene Flüssigkeit abfließen kann. Da der Beutel 10, wie vorstehend erläutert, üblicherweise kopfüber aufgehängt ist, also bei nach unten weisenden Rohrstücken 20, 22 die im Beutel befindliche Flüssigkeit ablaufen kann, sofern nicht eine wirksame Dichtung zwischen der Spitze des Infusionsgerätes und der Aufsatzwand gegeben ist, weist diese Aufsatzwand im Bereich der Einführöffnung 40 vorteilhafterweise einen ringförmig verlaufenden Wulst 44 auf, der sich dicht an diese Spitze beim Durchstechen der Membran 42 anlegen kann.

Bei der Einsiegelung von Rohrstücken mit Verbindungsschicht stellt das Rohr und sogar eine Latexkugel den Dorn dar. Weitere Hilfsmittel zur Innenkalibrierung werden nicht benötigt.

Da die Membran 42 selbst nach dem Sterilisieren im Autoklaven steril bleiben soll, ist die Einführöffnung 40 mit einem peelfähigen Verschlußstreifen 46 abgedeckt, der bei Bedarf abgezogen werden kann.

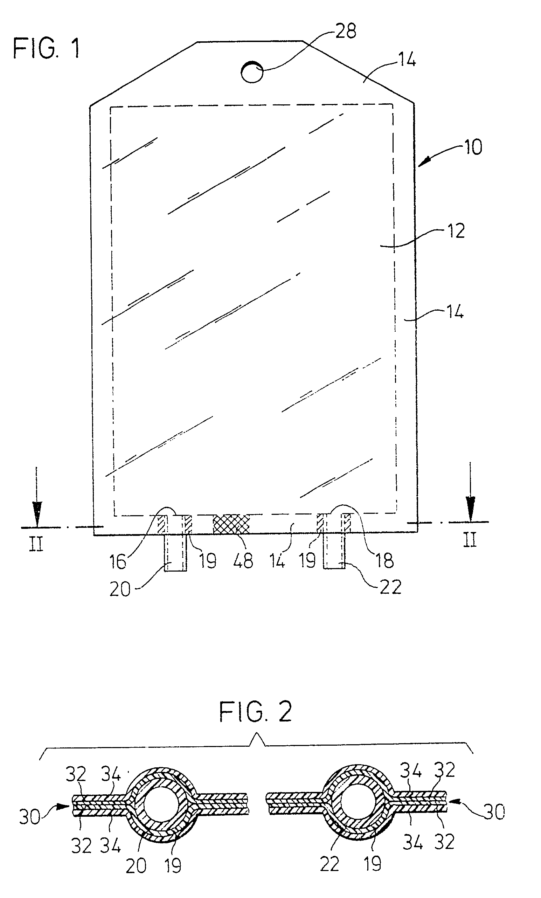

Die gemäß Fig. 4 gezeigte Ausführungsform kann natürlich eine spezielle Einführungsöffnung 48 im Rand des Beutels 10 aufweisen, wie sie in Fig. 1 schraffiert gezeigt ist und die ebenfalls wie die Auslauföffnungen 16 und 18 vor der Verschweißung bei der Herstellung des Beutels ausgespart ist. Diese Öffnung 48 erlaubt die Füllung des Beutels und wird nach dem Füllen in der üblichen Weise verschweißt oder versiegelt.

Eine weitere Ausführungsform ist in Fig. 5 und 6 gezeigt. Dabei wird ein Einsatzstück 50 vorgesehen, das – wie in Fig. 5 gezeigt – eine linsenförmige Struktur aufweisen kann und mit einer Verbindungsschicht 53 umgeben ist. Diese Struktur erleichtert an den Kanten die Verschweißung mit der Innenfolie 32, so daß ein nahezu stufenloser Übergang zwischen dem Verschweißungsrand 14, der Verbindungsschicht 53 und dem Einsatzkörper 52 gewährleistet wird.

Dieser Einsatzkörper 52 ist gemäß der in Fig. 5 und 6 gezeigten Ausführungsform mit Ein- und Auslauföffnungen 54 und 56 durchsetzt. Weiterhin weist er eine Füllöffnung 58 unter der nachstehend erwähnten Maßgabe auf.

Die Ein- und Auslauföffnung 54 und 56 ist jeweils mit einem schlauchförmigen Aufsatzstück 60 und 62 versehen, wobei die Stücke 60 und 62 gemäß der in Fig. 4 gezeigten Ausführungsform ausgebildet sein können. So können sie wiederum Membranen 64 und Ringwülste 66 aufweisen, wobei diese Anordnung dann die Füllöffnung 58 notwendig macht, die mit einem entsprechend angepaßten Stopfen nach dem Füllen sicher verschlossen werden kann. Der Einsatzkörper 52 kann aber auch ein oder mehrere nach außen vorstehende trichterförmig erweiterte Rohrstücke 20, 22, wie sie in Fig. 3 dargestellt sind, aufweisen, wobei diese Rohrstücke gegebenenfalls Membranen 24 und Kappen 25 oder durchstechbare Einsätze 27, wie aus Fig. 3 erkennbar, enthalten können, d. h. als Infusionsstopfen oder Zuspritzstopfen ausgebildet sein können.

Gemäß der in Fig. 6 gezeigten Ausführungsform sind die Ränder der Aufsatzstücke 60 und 62 über Schwächungslinien 68 mit jeweils einem Abreißdeckel 70 verbunden, der einerseits die Membran 64 bis zum Gebrauch steril hält und andererseits vor dem Gebrauch einfach abgerissen werden kann.

Natürlich kann auch die in Fig. 5 und 6 gezeigte Ausführungsform ohne Membran 64 und Wülste 66 sowie Abreißdeckel 70 vorgesehen sein, wodurch sich die Füllöffnung 58 erübrigen kann. Weiterhin kann natürlich auch ein schlauchförmiges Aufsatzstück 60 oder 62 oder mehrere davon vorgesehen sein.

In Fig. 7 ist eine weitere Ausführungsform eines solchen Einsatzstückes 72 gezeigt, das im wesentlichen aus einem ebenfalls vorzugsweise linsenförmigen Einsatzkörper 74 besteht, der im wesentlichen der Form des Einsatzkörpers 52 entspricht, jedoch keine rohrförmig vorstehenden Teile aufweist. Die Dicke dieser Einsatzkörper 52 und 74 ist dabei so bemessen, daß sie hinsichtlich ihrer Dikke mit dem Schweißrand 14 zusammenfallen und somit überstehende Bereiche bei diesen Körpern 52 und 74 vermieden werden. Bei dem in Fig. 7 ersichtlichen Einsatzkörper 74 entfallen somit die aus Fig. 6 ersichtlichen schlauchförmigen Aufsatzstücke 60 und 62, so daß dieser Körper 74 lediglich mit Ein- oder Auslauföffnungen 76 oder 78 durchsetzt ist. In diese Ein- oder Auslauföffnungen 76 oder 78 können die in Fig. 7a und 7b gezeigten Stopfen 77 oder 79 aus elastischem Material, die eine Membran 81 und eine Kappe 83 oder einen durchstechbaren Einsatz 85 aufweisen und innen verstärkt (nicht gezeigt) sind, vorteilhafterweise eingesetzt werden. Andererseits können natürlich die Einlauf- oder Auslauföffnungen 76 und 78 gemäß der in Fig. 4 gezeigten Ausführungsform verschlossen sein, also eine Membran 80 vorgesehen sein, die vorzugsweise an der Unterfläche des Einsatzkörpers 74 angeordnet ist. In einem solchen Fall ist wiederum eine Füllöffnung 82 vorgesehen, die in Fig. 7 gestrichelt gezeigt ist. Diese Füllöffnung 82 kann wiederum mit einem entsprechend angepaßten Stopfen verschlossen werden. Die Einlauf- und Auslauföffnungen 76 und 78 können, sofern eine Membran 80 vorgesehen ist, mit einer peelfähigen, nicht gezeigten Folie steril abgedeckt werden, die die Oberfläche des Einsatzkörpers 74 abdeckt.

In Fig. 8 ist die Schnittansicht einer weiteren Ausführungsform gezeigt, die im wesentlichen der Ausführungsform gemäß Fig. 1 entspricht und wobei auf einem Rohrstück 20, 22, das in den Beutel 10 im Bereich des Randes 14 eingespeist ist, ein schlauchförmiges Aufsatzstück 84 angeordnet ist.

Der Zuschnitt der in Fig. 8 gezeigten Ausführungsform des Beutels 10 entspricht im wesentlichen dem Zuschnitt des in Fig. 1 gezeigten Beutels, mit der Maßgabe, daß im Bereich der Rohrstücke 20, 22, der Verbindungsschicht 19 und der Aufsatzstücke 84 jeweils die beiden, den Beutel bildenden Folien lappenartig überstehende Bereiche 86 aufweisen, die bei entsprechender Verschweißung ihrer Ränder 88, 90 und 92 das Rohrstück 20, 22, die Verbindungsschicht 19 und das schlauchförmige Aufsatzstück 84 vollständig und dicht umhüllen können. Somit sind das Rohrstück 20, 22 mit Verbindungsschicht 19 und das schlauchförmige Aufsatzstück 84, das gemäß dieser Ausführungsform wiederum mit einer Membran 94 verschlossen ist und einen entsprechenden Wulst 96 aufweist, was bei den vorstehenden Ausführungsformen erläutert ist, nach dem Verschweißen dieses Bereichs steril nach außen abgedichtet.

Dabei wird der Rand 14 bei der Beutelherstellung zunächst nur bis zu dem Bereich 98 zugeschweißt, so daß also der Bereich 86, der durch zwei lappenartige Foliengebilde erzeugt wird, geöffnet bleibt. Anschließend wird in diesen geöffneten Bereich 86 das Rohrstück 20, 22 mit Verbindungsschicht 19 und Aufsatzstück 84 eingeführt, wobei die Umschweißung dieses Rohrstückes mit Verbindungsschicht und Aufsatzstück 84 im Bereich des Schweißrandes 14 erfolgt, also dieser Schweißrand 14 vollständig entlang des Beutelumfangs geschlossen wird. Der immer noch in seinen Rändern 88, 90 und 92 offene Bereich wird dann anschließend entlang der Ränder 88, 90 und 92, wie dies in Fig. 8 dargestellt ist, zugeschweißt, wobei der Innenraum 100 dieses Bereichs 86 unverschweißt bleibt.

Vorteilhafterweise ist am Übergang zwischen dem Innenraum 100 und dem Rand 92 eine Schwächungslinie 102 vorgesehen, die bei entsprechender Beanspruchung des Randes 92, der vorteilhafterweise als Grifflasche ausgeführt ist, aufgerissen werden kann, wobei der Rand 92 vollständig entfernt werden kann.

Natürlich können auch mehrere Rohrstücke 20, 22 und Aufsatzstücke 84 von einem Bereich 86 umgeben sein oder aber auch mehrere Bereiche 86 können jeweils ein Rohrstück 20, 22 mit Aufsatzstück 84 umgeben. Beispielsweise kann die in Fig. 1 gezeigte Ausführungsform mit zwei Rohrstücken/Aufsatzstücken zwei Bereiche 86 getrennt voneinander aufweisen und eine Füllöffnung 48 vorgesehen sein, die nicht von diesen Bereichen erfaßt wird. Andererseits können sämtliche drei Öffnungen zum Beutel hin von einem Bereich vollständig umgeben sein, wobei diese Einschweißungsart nicht davon abhängig ist, ob die Aufsatzstücke von einer Membran oder gegebenenfalls hohlen Stopfen verschlossen sind.

Als Material für die Rohrstücke 20, 22 und die Einsatzstücke 50, 72 werden vorzugsweise HartPVC, Polypropylen, Polyamide, Polycarbonate, Polyester, Polyacrylate, insbesondere Polycarbonate, verwendet, während als Material für die Verbindungsschicht vorzugsweise ein Copolymerisat aus Ethylen und Vinylacetat mit einem Vinylacetatgehalt von 5–50 Gew.-%, insbesondere 15–40 Gew.-%, und als Material für die Aufsatzstücke 36, 60 und 62 und 84 sowie für die Stopfen 77 und 79 ein Copolymerisat aus Ethylen und Vinylacetat mit einem Vinylacetatanteil von vorzugsweise 25–35 Gew.-%, wobei auf die vorstehend genannten Produkte «Hostalen», «Evatane» oder «Alkathene» zurückgegriffen wird, gewählt wird.

In Fig. 9 ist die Schnittansicht einer weiteren Ausführungsform des erfindungsgemäßen Aufbewahrungsbeutels dargestellt, wobei anstelle eines Rohr- oder Einsatzstückes eine Latexkugel mit der Verbindungs- oder Zwischenschicht verbunden ist.

Der Zuschnitt der in Fig. 9 gezeigten Ausführungsform des Beutels 10 entspricht im wesentlichen dem Zuschnitt des in Fig. 1 gezeigten Beutels, mit der Maßgabe, daß im Bereich der Auslauftülle, wie in Fig. 8 gezeigt und erläutert, die beiden, den Beutel bildenden Folien lappenartig überstehende Bereiche 86 aufweisen, die bei entsprechender Verschweißung ihrer Ränder 88, 90 und 92 die Latexkugel 104 und die Verbindungs- oder Zwischenschicht 106 vollständig und dicht umhüllen können. Somit sind die Verbindungs- oder Zwischenschicht 106 und die Latexkugel 104 nach Verschweißen dieses Bereiches steril nach außen abgedichtet.

Die Herstellung erfolgt wie vorstehend für die in Fig. 8 dargestellte Ausführungsform beschrieben, wobei jedoch die Verbindungs- oder Zwischenschicht 106 (in Form eines Rohrabschnittes) anstelle mit einem dort beschriebenen Rohr- oder Einsatzstück mit ihrer Innenoberfläche wenigstens teilweise mit einem im wesentlichen formstabilen Einsatzstück 104 (z.B. wie dargestellt, einer Latexkugel oder einem Latexzylinder) verbunden (eingesiegelt, verschmolzen) wird. Anstelle von Latex kann das Einsatzstück 104 aus einem anderen geeigneten und vom medizinischen Standpunkt unbedenklichen durchstechbaren Material bestehen. Für die Verbindungs- oder Zwischenschicht 106 kann das gleiche Material, wie vorstehend für die Verbindungsschicht 19, 53 beschrieben, verwendet werden.

In Fig. 9 ist wie in Fig. 8 der Innenraum mit 100 und die Schwächungslinie mit 102 bezeichnet. Bei der in Fig. 9 gezeigten Ausführungsform kann die Verbindungs- oder Zwischenschicht 106 mit dem Beutelrand abschließen oder nach außen und/oder nach innen (in den Beutel) darüber hinausragen oder auch schmaler als der Beutelrand sein. Gemäß dieser Ausführungsfrom wird der Zuspritz- oder Anstichbereich durch die Folie steril abgedeckt. Es ist jedoch auch möglich, den Zuspritz- oder Anstichbereich wie vorstehend in den anderen Ausführungsformen dargestellt, entsprechend abzudecken.

**Patentansprüche**

1. Aufbewahrungsbeutel, insbesondere für medizinische Zwecke zur Lagerung von Blut oder Infusionslösungen, umfassend
   a) einen Beutelkörper (12) aus einem ersten polymeren Material
   b) wenigstens eine Auslauftülle in Form eines Rohrstückes (20, 22, 50, 72, 104) aus einem zweiten polymeren Material und
   c) eine Verbindungsschicht (19, 53) aus einem dritten polymeren Material zum Verbinden des ersten und zweiten polymeren Materials, wobei das dritte polymere Material unvernetztes Copolymerisat von Ethylen und Vinylacetat mit einem Vinylacetat-Gehalt von 10 bis 50 Gew.-% umfaßt, dadurch gekennzeichnet, daß das erste polymere Material Polyethylen ist, das mit einer Folie aus Polyamid, Polyvinylidenchlorid, Polyethylenterephthalat oder Polyester kaschiert ist, daß das zweite polymere Material formstabil ausgebildet ist und daß das dritte polymere Material auch Polyurethan sein kann.

2. Beutel nach Anspruch 1, dadurch gekennzeichnet, daß das Copolymerisat einen Vinylacetatgehalt von 15 bis 40 Gew.-% aufweist.

3. Beutel nach Anspruch 1 oder 2, dadurch gekennzeichnet, daß das Polyethylen eine Dichte von 0,9 bis 0,94 und einen Schmelzbereich oberhalb 116°C aufweist.

4. Beutel nach Anspruch 1 bis 3, dadurch gekennzeichnet, daß das aus Polyethylenfolie und Kaschierfolie bestehende Laminat bis zu 0,2 mm stark ist, wobei die Polyethylenfolie eine Stärke von 50 bis 100 µm und die Kaschierfolie eine Stärke von 20 bis 100 µm aufweist.

5. Beutel nach Anspruch 1 bis 4, dadurch gekennzeichnet, daß das Rohr- oder Einsatzstück (20, 22, 50, 72, 104) aus Hart-PVC, Polypropylen, Polyamid, Polycarbonat, Polyester, Polyacrylat, Latex, einem Copolymerisat derselben oder einem Styrol enthaltenden Copolymerisat derselben besteht.

6. Beutel nach Anspruch 1 bis 5, dadurch gekennzeichnet, daß die Verbindungsschicht (19, 53) über das Rohrstück (20, 22) oder das Einsatzstück (50, 72) gebracht worden ist und das Copolymerisat der Verbindungsschicht (19, 53) mit dem Polyethylen des Beutels (10) und dem Rohrstück (20, 22) oder dem Einsatzstück (50, 72) verschmolzen ist.

7. Beutel nach Anspruch 1 bis 6, dadurch gekennzeichnet, daß die Rohrstücke (20, 22) oder die im Einsatzstück (50, 72) vorgesehenen Einlauf- oder Auslauföffnungen (76, 78) Infusionsstopfen (77) oder Zuspritzstopfen (79) aufweisen, die mit einer Membran (24) und einer Kappe (25) oder einem durchstechbaren Einsatz (27) versehen sind.

8. Beutel nach Anspruch 1 bis 7, dadurch gekennzeichnet, daß die Rohrstücke (20, 22) oder die Einsatzstücke (50, 72) Aufsatzstücke (38, 60, 62, 84) aufweisen.

9. Beutel nach Anspruch 8, dadurch gekennzeichnet, daß die Aufsatzstücke (38, 60, 62, 84), die Rohrstücke (20, 22) oder die Öffnungen (76, 78) mit einer durchstechbaren Membran (24, 42, 64, 80, 94) verschlossen sind.

10. Beutel nach Anspruch 1 bis 9, dadurch gekennzeichnet, daß am Beutel (10) eine zuschweißbare Füllöffnung (48) oder im Einsatzstück (50, 72) eine verschließbare Füllöffnung (58, 82) vorgesehen ist.

11. Beutel nach Anspruch 9, dadurch gekennzeichnet, daß sich an die Membran (42, 64, 80, 94) eine Verengung oder ein Wulst (44, 66, 96) der Öffnung (40) anschließt.

12. Beutel nach Anspruch 1 bis 11, dadurch gekennzeichnet, daß die Aufsatzstücke (38, 60, 62, 84), die Rohrstücke (20, 22) oder die Einsatzstücke (50, 72) mit einem entfernbaren Verschluß (40, 70) versehen sind.

13. Beutel nach Anspruch 1 bis 12, dadurch gekennzeichnet, daß die Aufsatzstücke (84) und die Rohrstücke (20, 22) oder die Einsatzstücke (50, 72) und die Verbindungsschicht (19, 53) von einem oder mehreren Folienbereichen (86) umschweißt sind.

14. Beutel nach Anspruch 1 bis 13, dadurch gekennzeichnet, daß die Verbindungsschicht rohrförmig ausgeführt ist und wenigstens teilweise entlang ihres Außenumfangs mit dem Beutelmaterial verbunden ist und hinsichtlich ihrer Innenoberfläche wenigstens teilweise mit dem im wesentlichen formstabilen Einsatzstück verbunden ist.

**Claims**

1. Storage bag, in particular for medical purposes for the storage of blood or infusion solutions, comprising
   a) a bad body (12) consisting of a first polymeric material,
   b) at least one discharge nozzle in the form of a tubular member (20, 22, 50, 72, 104) consisting of a second polymeric material and
   c) a connecting layer (19, 53) consisting of a third polymeric material for connecting the first and second polymeric materials, the third polymeric material comprising uncross-linked copolymerisate of ethylene and vinyl acetate with a vinyl acetate content of 10 to 50% by weight, characterised in that the first polymeric material is polyethylene, which is coated with a film of polyamide, polyvinylidene chloride, polyethylene terephthalate or polyester, that the second polymeric material is dimensionally stable and that the third polymeric material can also be polyurethane.

2. Bag according to Claim 1, characterised in that the copolymerisate has a vinyl acetate content of 15 to 40% by weight.

3. Bag according to Claim 1 or 2, characterised in that the polyethylene has a density of 0.9 to 0.94 and a melting point above 116 °C.

4. Bag according to Claims 1 to 3, characterised in that the laminate consisting of polyethylene film and a coating film has a thickness of up to 0.2 mm, the polyethylene film having a thickness of 50 to 100 µm and the lining film a thickness of 20 to 100 µm.

5. Bag according to Claims 1 to 4, characterised in that the tubular or insert member (20, 22, 50, 72, 104) comprises hard PVC, polypropylene, polyamide. polycarbonate, polyester, polyacrylate, latex, a copolymerisate thereof or a copolymerisate containing styrene.

6. Bag according to Claims 1 to 5, characterised in that the connecting layer (19, 53) is applied over the tubular member (20, 22) or the insert member (50, 72) and the copolymerisate of the connecting layer (19, 53) is fused with the polyethylene of the bag (10) and the tubular member (20, 22) or the insert member (50, 72).

7. Bag according to Claims 1 to 6, characterised in that the tubular members (20, 22) or the inlet or outlet openings (76, 78) provided in the insert member (50, 72) comprise infusion stoppers (77) or injection stoppers (79), which are provided with a membrane (24) and a cap (25) or a pierceable insert (27).

8. Bag according to Claims 1 to 7, characterised in that the tubular members (20, 22) or the insert members (50, 72) comprise attachment members (38, 60, 62, 84).

9. Bag according to Claim 8, characterised in that the attachment members (38, 60, 62, 84), the tubular members (20, 22) or the openings (76, 78) are sealed by a pierceable membrane (24, 42, 64, 80, 94).

10. Bag according to Claims 1 to 9, characterised in that provided on the bag (10) is a filling opening (48) which can be closed by welding or provided in the insert member (50, 72) is a closable filling opening (58, 82).

11. Bag according to Claim 9, characterised in that adjoining the membrane (42, 64, 80, 94) is a constriction or a bead (44, 66, 96) of the opening (40).

12. Bag according to Claims 1 to 11, characterised in that the attachment members (38, 60, 62, 84), the tubular members (20, 22) or the insert members (50, 72) are provided with a removable seal (40, 70).

13. Bag according to Claims 1 to 12, characterised in that the attachment members (84) and the tubular members (20, 22) or the insert members (50, 72) and the connecting layer (19, 53) are welded in by one or more film regions (86).

14. Bag according to Claims 1 to 13, characterised in that the connecting layer is constructed in a tubular manner and is connected at least partly along its outer periphery to the bag material and as regards its inner surface is connected at least partly to the substantially dimensionally stable insert member.

**Revendications**

1. Sac de stockage, en particulier à usage médical pour la conservation du sang ou de solutions pour perfusion, comprenant
   a) un corps de sac (12) fait d'une première matière polymère,
   b) au moins un conduit de sortie sous la forme d'une tubulure (20, 22, 50, 72, 104) fait d'une deuxième matière polymère, et
   c) une couche de liaison (19, 53) faite d'une troisième matière polymère pour lier la première matière polymère et la deuxième, la troisième matière polymère comprenant un copolymère non réticulé d'éthylène et d'acétate de vinyle ayant une teneur en acétate de vinyle de 10 à 50% en poids, caractérisé en ce que la première matière polymère est le polyéthylène, qui est doublé d'une feuille de polyamide, de poly(chlorure de vinylidène), de poly(téréphtalate d'éthylène) ou de polyester, la deuxième matière polymère est rendue dimensionnellement stable et la troisième matière polymère peut aussi être un polyuréthane.

2. Sac suivant la revendication 1, caractérisé en ce que le copolymère a une teneur en acétate de vinyle de 15 à 40% en poids.

3. Sac suivant la revendication 1 ou 2, caractérisé en ce que le polyéthylène a une densité de 0,9 à 0,94 et une région de fusion au-dessus de 116°C.

4. Sac suivant l'une quelconque des revendications 1 à 3, caractérisé en ce que le stratifié consistant en une feuille de polyéthylène et une feuille de doublage a une épaisseur jusqu'à 0,2 mm, la feuille de polyéthylène ayant une épaisseur de 50 à 100 μm et la feuille de doublage ayant une épaisseur de 20 à 100 μm.

5. Sac suivant l'une quelconque des revendications 1 à 4, caractérisé en ce que la tubulure ou le raccord (20, 22, 50, 72, 104) consiste en PVC dur, en polypropylène, en polyamide, en polycarbonate, en polyester, en polyacrylate, en latex, en un copolymère de ceux-ci ou en un copolymère de ceux-ci contenant du styrène.

6. Sac suivant l'une quelconque des revendications 1 à 5, caractérisé en ce que la couche de liaison (19, 53) a été appliquée par-dessus la tubulure (20, 22) ou le raccord (50, 72) et le copolymère de la couche de liaison (19, 53) est fondu avec le polyéthylène du sac (10) et la tubulure (20, 22) ou le raccord (50, 72).

7. Sac suivant l'une quelconque des revendications 1 à 6, caractérisé en ce que les tubulures (20, 22) ou les orifices de remplissage ou de sortie (76, 78) prévus dans le raccord (50, 72) portent des bouchons pour perfusion (77) ou des bouchons pour injection (79) qui sont munis d'une membrane (24) et d'une coiffe (25) ou d'un tampon perforable (27).

8. Sac suivant l'une quelconque des revendications 1 à 7, caractérisé en ce que les tubulures (20, 22) ou les raccords (50, 72) comprennent des pièces de rallonge (38, 60, 62, 84).

9. Sac suivant la revendication 8, caractérisé en ce que les pièces de rallonge (38, 60, 62, 84), les tubulures (20, 22) ou les orifices (76, 78) sont obturés par une membrane perforable (24, 42, 64, 80, 94).

10. Sac suivant l'une quelconque des revendications 1 à 9, caractérisé en ce qu'un orifice de remplissage qui peut être fermé par soudre (48) est prévu sur le sac (10) ou un orifice de remplissage obturable (58, 82) est prévu dans le raccord (50, 72).

11. Sac suivant la revendication 9, caractérisé en ce qu'un rétrécissement ou un bourrelet (44, 66, 96) de l'orifice (40) fait corps avec la membrane (42, 64, 80, 94).

12. Sac suivant l'une quelconque des revendications 1 à 11, caractérisé en ce que les pièces de rallonge (38, 60, 62, 84), les tubulures (20, 22) ou les raccords (50, 72) sont munis d'un obturateur amovible (40, 70).

13. Sac suivant l'une quelconque des revendications 1 à 12, caractérisé en ce que les pièces de rallonge (84) et les tubulures (20, 22) ou les raccords (50, 72) et la couche de liaison (19, 53) sont enveloppés par soudre dans un ou plusieurs domaines de feuille (86).

14. Sac suivant l'une quelconque des revendications 1 à 13, caractérisé en ce que la couche de liaison est réalisée en forme de tube et est unie au moins pour partie suivant son contour extérieur à la matière du sac et est unie, en ce qui concerne sa face intérieure, au moins pour partie au raccord en substance dimensionnellement stable.

FIG. 1

FIG. 2

FIG.3

FIG.8

FIG.9

FIG. 4

FIG. 5

FIG. 6

FIG. 7

FIG. 7b

FIG. 7a